# EUROPEAN PATENT APPLICATION

(11) **EP 1 829 755 A1**
(43) Date of publication of application: **05.09.2007**
(21) Application number: 05799404.8
(22) Date of filing: 28.10.2005
(51) Int. Cl.: B60R 21/20

(54) **SIDE AIR BAG DEVICE AND SIDE AIR BAG SYSTEM**

(30) Priority: 05.11.2004 JP 2004322483
(71) Applicant: Autoliv Development AB, 44783 Vargarda (SE)
(72) Inventor: FUKUDA, Hideho,C/O Tsukuba Office, Kasumigaura-shi, Ibaraki 315-0056 (JP); MIYAUCHI, Nobuaki,C/O Tsukuba Office, Kasumigaura-shi, Ibaraki 315-0056 (JP)
(74) Representative: Hoeger, Stellrecht & Partner Patentanwälte
(86) International application number: PCT/JP2005/019899
(87) International publication number: WO 2006/049101

(57) **Abstract**

[Problems to be Solved] Heretofore, the size of the upper chamber was large, to as to be in a position to protect the head and chest of an occupant, thus being disadvantageous from the standpoint of the expansion speed of the airbag. Furthermore, it was necessary to set an upper limit on the internal pressure of the upper chamber, making it impossible to withstand a powerful side collision.

[Means for Solving These Problems] An airbag 1 is partitioned into an upper chamber 1c and a lower chamber 1d by means of a partition 1b, with the size of said upper chamber 1c being such that, during development, it does not reach the head of an occupant with a body type corresponding to an adult male M, and said upper chamber 1c having a construction enabling it to develop in the event of a vehicle collision to the side of the shoulders when standardized for an occupant with a body type corresponding to a small adult female W, and furthermore, said lower chamber 1d being capable of developing toward the abdomen of an occupant M, W, and provided with an adjustment means which raises the internal pressure of said upper chamber 1c higher than the internal pressure of the lower chamber 1d, in the event of a vehicle collision.

## Description

### Field of Technology

The present invention relates to a side airbag device and a side airbag system for protecting an occupant from impact and compression in the event of a vehicle collision, and primarily in the event of a side collision.

### Background Technology

A side airbag device in a vehicle is formed from an airbag and an inflator installed within the rear end part of the airbag in one example, and the airbag device is stored within a seat back of the vehicle usually. Then, in the event of a vehicle collision, and particularly in the event of a side collision, an inflator gas is supplied from the inflator to the inside of the airbag, causing the airbag to develop between the side wall of the vehicle and the occupant, so as to protect the occupant.

It is important to cause the airbag to develop at a suitable position between the side wall of the vehicle and the occupant in a very short period of time for the side airbag, since the space between the side wall of the vehicle and the occupant is extremely small.

Accordingly, a side airbag device was heretofore disclosed which is, for example, partitioned inside into an upper chamber and a lower chamber, and which is capable of developing the airbag to an appropriate configuration with a duct which serves as a passageway for rapidly feeding inflator gas upwards to the inside of the airbag.
Patent Reference 1: Japanese Patent Application Kokai Publication No. 2000-85515

### Disclosure of the Invention

### Problems to Be Solved by the Invention

However, the conventional side airbag device was disadvantageous from the point of the developing speed of the airbag, since the upper chamber was made large extending upwards in order to reliably protect the head of the occupant.

Furthermore, the conventional side airbag device caused the airbag to develop toward the side of the occupant's head and chest. However, when the airbag developing pressure is too large, the head and the chest cannot withstand such a load, due to the fact that the head and chest are weak parts of the physical structure of the human body. Therefore, in the conventional side airbag device, there was an upper limit on the internal pressure of the inflator gas supplied to the airbag, and the internal pressure had to be lower than a fixed level that could be withstood by the head and chest. Consequently, there was the drawback that the internal pressure of the inflator gas of the airbag was insufficient to protect an occupant against a powerful side collision.
Furthermore, the fact that the internal pressure of the inflator gas could not be raised made it impossible to increase the developing speed.

The present invention was devised taking the above-described problems of the prior art into consideration, and has as its objective to provide a side airbag device with a simple structure that makes it possible to reduce manufacturing costs, increase the airbag developing speed, and rapidly develop with appropriate internal pressure on specified body parts, making it possible to reliably protect the occupant.

Hypothetical occupants range from an occupant with a body type corresponding to an adult male (SID) to an occupant with a body type corresponding to a small adult female (Euro SID2s), but the airbag device of the present invention is constructed so as to suitably protect the occupants of any body types.

### Means for Solving the Problems

The present invention provides a side airbag device which protects the occupants. The airbag device comprises an airbag stored within a seat back and developed by a supply of an inflator gas from an inflator toward a front of a vehicle between a side of the vehicle and the occupant in the event of a vehicle collision. The airbag is partitioned into an upper chamber and a lower chamber by means of a partition. The upper chamber does not reach the head of an occupant having a boy type corresponding to an adult male, and it develops to a side of the shoulder of the occupant with a body type corresponding to a small adult female. The lower chamber develops toward the abdomen of the occupant. The airbag device further comprise an adjustment means configured to supply the inflator gas from the inflator into the upper and lower chambers in the event of a vehicle collision to develop them in such a manner that it raises an internal pressure of the upper chamber higher than the internal pressure of the lower chamber.

### Advantageous Effects of the Invention

The present invention makes it possible to increase the developing speed of an airbag by making the upper chamber more compact, by employing a construction that actively protects the shoulders of an occupant. Furthermore, the upper chamber which protects the occupant's shoulders can have the internal pressure set at a high level, thereby making it possible to protect the occupant even from a powerful side collision. Moreover, it is possible to reliably protect occupants even with different body types, since the position where the internal pressure is highest during development of the upper chamber is aligned with the area where the side of the shoulder of an occupant with a body type corresponding to a small adult female is positioned.

On the other hand, since the internal pressure of the lower chamber is set lower than that of the upper chamber, it is possible to suitably protect the weak abdomen with the lower chamber having a low internal pressure.

### BRIEF DESCRIPTION OF THE DRAWINGS

FIG. 1 is a side view of the first working example of the present invention side airbag device with the airbag in a developed state.
FIG. 2 is a drawing illustrating the construction of an airbag of the first working example.
FIG. 3 is a sectional view along the line X'-X' in FIG. 2.
FIG. 4 is a sectional view from above the side airbag device of the first working example, stored within a seat back.
FIG. 5 is a drawing illustrating the construction of an inflator.
FIG. 6 is a drawing illustrating the construction of the second working example of the present invention.
FIG. 7 is a drawing illustrating the construction of the third working example of the present invention.

### Explanation of the Reference Symbols

- 1: Airbag
- 1a: Rear end part
- 1b: Partition
- 1b1: Separating wall fabric
- 1b12: Rear end part of partition
- 1b2: Sewn partitioning member
- 1b13: Through hole
- 1c: Upper chamber
- 1d: Lower chamber
- 1e: Reinforcing member
- 1g1, 1g2: Base fabric
- 1j: Vent
- 2: Inflator
- A: Side airbag device
- S: Seat back
- M: Occupant with body type corresponding to an adult male
- W: Occupant with a body type corresponding to an adult female
- M1, W1: Head
- M2, W2: Shoulders
- M3, W3: Upper arm

The first embodiment of the side airbag device of the present invention is a side airbag device which protects an occupant by supplying an inflator gas from an inflator in the event of a vehicle collision, causing an airbag stored within a seat back to develop toward the front of a vehicle between the side of the vehicle and the occupant. Said side airbag device is partitioned into an upper chamber and a lower chamber. Said upper chamber is sized such that, during development of the airbag, it does not reach the head of an occupant with a body type corresponding to an adult male, but it can develops in the event of a vehicle collision to the side of the shoulder when standardized for an occupant with a body type corresponding to a small adult female. Furthermore, said lower chamber is capable of developing toward the abdomen of an occupant. The airbag device is also provided with an adjustment means which raises the internal pressure of said upper chamber higher than the internal pressure of the lower chamber, in the event of a vehicle collision, when the inflator gas is respectively supplied from said inflator to develop said upper chamber and said lower chamber.

The second embodiment of the side airbag device of the present invention is a side airbag device which protects an occupant by supplying an inflator gas from an inflator in the event of a vehicle collision, causing an airbag stored within a seat back to develop toward the front of a vehicle between the side of the vehicle and the occupant. Said side airbag device is partitioned into an upper chamber and a lower chamber by means of a partition. Said upper chamber is configured to develop toward the side of the shoulder of an occupant. Said lower chamber is configured to develop toward the side of the abdomen of the occupant. The airbag device is also provided with an adjustment means which raises the internal pressure of said upper chamber higher than the internal pressure of the lower chamber, in the event of a vehicle collision, when the inflator gas is respectively supplied from said inflator to develop said upper chamber and said lower chamber. Also, the device is also configured such that during expansion of said airbag, a part of said upper chamber will develop with the maximum internal pressure of the airbag around the area where the shoulders of an occupant with a body type corresponding to a small adult female are positioned.

In the side airbag device of the first or second embodiment of the present invention, when the partition is constructed at a height positioning it on the side of the upper arm of an occupant and is caused to develop in the longitudinal direction of the vehicle, and is constructed so that the attachment of the rear end part of the partition is reinforced by a reinforcing member. This makes it possible to reliably protect the shoulders of an occupant with any body type, and also to prevent a malfunction in the attachment of the back part of the partition, and therefore advantageous.

Furthermore, in the side airbag device of the first or second embodiment of the present invention, when the partition employs either a separating wall fabric sewn between two sheets of base fabric facing each other and forming the airbag, or a sewn partitioning member provided by stitching the two base sheets together, then it is possible to obtain a simple airbag construction by simply employing a separating wall fabric or a sewn partitioning member.

Furthermore, in the side airbag device of the first or second embodiment of the present invention, when a vent connecting to outside of the airbag is provided at a predetermined position of the lower chamber, it is possible to prevent the internal pressure of the lower chamber from becoming excessively high, due to the fact that the inflator gas flows to the outside, thereby reliably protecting the weak abdomen by utilizing a suitable internal pressure, and therefore advantageous.

Moreover, in the side airbag device of the first or second embodiment of the present invention, when a through-hole mutually connecting the upper chamber and the lower chamber is provided, it is possible to further suitably adjust the difference in the internal pressure of the inflator gas in the upper chamber and the lower chamber.

The first embodiment of the side airbag system of the present invention is a side airbag system which protects an occupant by developing at least one airbag between the side of a vehicle and an occupant by supplying an inflator gas from an inflator. The side airbag system comprises a first airbag stored within a seat back and having an upper chamber capable of developing toward the shoulders of an occupant, and a lower chamber capable of developing toward the abdomen of an occupant. The side airbag system further comprises a door pad between the side of the vehicle and the occupant for protecting an occupant's pelvis, or a second airbag which develops to protect the occupant's pelvis in the event of a vehicle collision. During development of the first airbag, the internal pressure of the upper chamber is higher than the internal pressure of the lower chamber. A part of said upper chamber will develop with the maximum internal pressure of the airbag around the area where the shoulders of an occupant with a body type corresponding to a small adult female are positioned.

In the side airbag system of the first embodiment, when a third airbag is further provided to protect the occupant's head and disposed at the upper rim of a window of a vehicle, it becomes possible to protect both the pelvis and the head, and therefore advantageous.

Furthermore, the second embodiment of the side airbag system of the present invention is a side airbag system which protects an occupant by developing at least one airbag between the side of a vehicle and an occupant by supplying an inflator gas from an inflator. The side airbag system comprises a first airbag stored within a seat back and having an upper chamber capable of developing toward the shoulders of an occupant, and a lower chamber capable of developing toward the abdomen of an occupant. The side airbag system further comprises a third airbag disposed at the upper rim of a window of a vehicle to protect the occupant's head and. The third airbag is constructed such that the internal pressure of the upper chamber is higher than the internal pressure of the lower chamber during expansion of the first airbag, and that a part of said upper chamber will develop with the maximum internal pressure around the area where the central part of the shoulders of an occupant with a body type corresponding to that of a small adult female is positioned.

### Examples

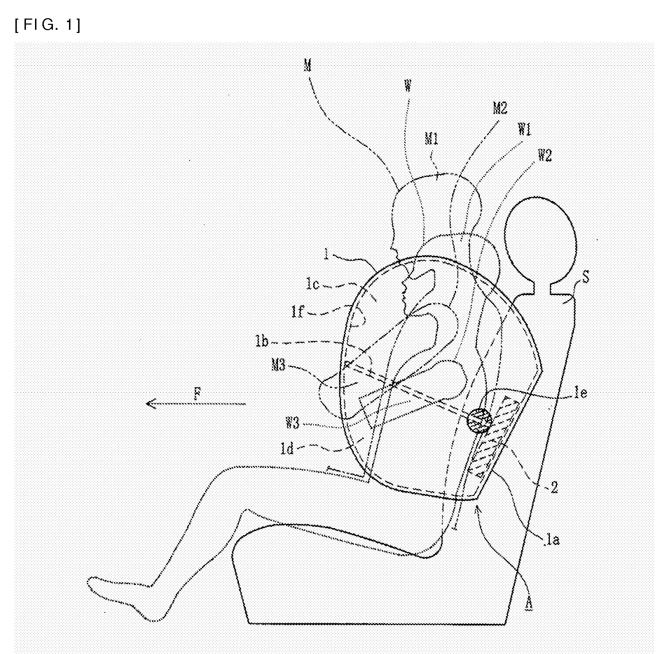

Following is a detailed description of the present invention based on the examples illustrated in the appended drawings. FIG. 1 is a side view of a side airbag device A of the first embodiment, with an airbag 1 in a developed state. FIG. 1 shows two occupants M and W seated in seats provided with a seat back S, and passenger M is an occupant with a body type corresponding to an adult male (SID) and passenger W is an occupant with a body type corresponding to a small adult female (EuroSID2s).

The side airbag device A includes an inflator 2 installed in the rear end part 1a of the airbag 1. The inside of the airbag 1 is partitioned into an upper chamber 1c and a lower chamber 1d by a partition 1b provided in the longitudinal direction of the vehicle between an inner wall 1f toward the front of the vehicle and the rear end part 1a. In the event of a vehicle collision, and in particular, in the event of a side collision, an inflator gas is supplied by discharging it from the inflator 2 into the upper chamber 1c and the lower chamber 1d, respectively, causing the airbag 1 to be inflated toward the front of the vehicle (in the direction of the arrow F) and between the side of the vehicle and the occupants M and W, so as to protect the occupants M and W. It should be noted that 1e represents a reinforcing member which will be described later.

The upper chamber 1c is designed to have a thickness (dimension in the direction of the vehicle width) and expansion position at the time of development so as to enable it to protect the shoulders M2 and W2 of the occupants M and W in the event of a vehicle collision. In this case, since the body types of the occupant M and W differ, it becomes an issue whether to set the position where the maximum pressure occurs in the event of a vehicle collision at the shoulders M2 or W2, but in the present invention, the standard is set for the occupant W with a body type corresponding to a small adult female, thus making it possible to develop toward the side of the shoulders W2.

The reason for this is that generally, an adult male is stronger that a small female against the developing pressure of the airbag 1, so it is thought to be less of a problem to design the thickness (dimension in the direction of the vehicle width) and development position at the time of development of the upper chamber 1c with a small female as the standard.

As shown in FIG. 1, the size of the upper chamber 1c during development is such that it will not reach the head M1 of the occupant M with a body type corresponding to an adult male. Accordingly, the entire airbag 1 is limited to a size large enough to protect a range from the shoulders M2, W2 to the abdominal area of the occupants M and W, thereby making it possible to achieve a compact size, and to achieve a greater developing speed of the airbag 1. It should be noted that W1 represents a head of the occupant W.

Since the shoulders M2 and W2 are at a smaller distance from the side wall of the vehicle than the head M1 and W1 which were protected by the conventional side airbag device, the developing speed must be greater in order to actively protect the shoulders M2 and W2. The present invention enhances the developing speed by designing the airbag to be more compact, as described above.

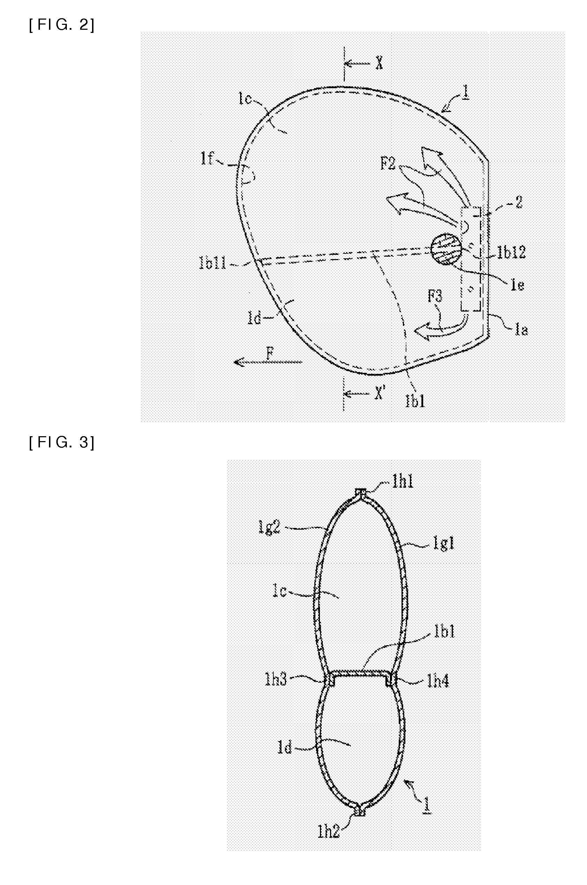

Since the shoulders M2 and W2 can withstand a greater load than the head and abdomen, the upper chamber 1c which protects the shoulders M2 and W2 has the inflator gas internal pressure set higher than the lower chamber 1d which is caused to develop toward the side of the abdomen, in accordance with an airbag shown in FIG. 2 which is described later. Furthermore, preferably, it is possible to use a method of arranging the discharge port of the inflator 2 only at the top. Even in this method, the flow volume of the gas toward the upper chamber 1c naturally increases, so that the internal pressure of the upper chamber 1c is greater than the internal pressure of the lower chamber 1d. Also, the present invention side airbag device A produced with the above-described configuration and construction of the airbag 1 is able to reliably protect an occupant, even against a powerful side collision. Moreover, it is possible to further increase the developing speed of the airbag 1, since the internal pressure of the inflator gas of the upper chamber 1c can be increased.

In addition, it is possible to actively protect the shoulders M2 and W2 which are nearest to the side wall of the vehicle, as described above, thereby achieving the advantageous effect of also protecting the head M1 and W1 which are in a position farther from the interior side wall than the shoulders M2 and W2. On the other hand, since the lower chamber 1d is set with an internal pressure lower than that of the upper chamber 1c, it is possible to suitably protect the weak abdomen by means of the lower chamber which has a low internal pressure.

It should be noted that since there is a difference in body types between the occupant M and the occupant W, in this embodiment, the position of the height at which the partition 1b is provided to vertically partition the airbag 1 is set at a height that makes it possible to position it toward the sides of the upper arms M3 and W3 of both of the occupants M and W. When this is done, the upper chamber 1c reliably develops toward the sides of the shoulders W2, making it possible to protect both the shoulders M2 and W2, consequently making it possible to protect both occupants M and W.

Next, FIG. 2 a drawing illustrating the construction of an airbag of the first embodiment, and FIG. 3 is a sectional view along the line X'-X' in FIG. 2. The airbag 1 has a bag shape, with the entire periphery of the two base fabrics 1g1 and 1g2 that face each other being sewn together at the positions 1h1 and 1h2, with the interior space being separated into two chambers, the upper chamber 1c and the lower chamber 1d.

In the first embodiment, a separating wall fabric 1b1, which extends in the longitudinal direction of the vehicle, is used as a partition 1b to partition the two chambers of the airbag 1. When seen from the back of the vehicle, as shown in FIG. 3, the separating wall fabric 1b1 spans the two base fabrics 1g1 and 1g2 which are sewn together at the positions 1h3 and 1h4, and when viewed from the side of the vehicle, as shown in FIG. 2, the rear end part 1b12 thereof is sewn in the proximity of the inflator 2, and the front end part 1b11 thereof is sewn to extend up to the inner wall of the front side of the airbag 1.

As described above, the separating wall fabric 1b1 is set at a height so that it can be at a position at the side of the upper arms M3 and W3 of the occupant M and the occupant W. Furthermore, the rear end part 1b12 of the partition is reinforced by the a reinforcing member 1e sewn to closely attach the two facing base fabrics 1g1 and 1g2 to each other. Since there is a risk that the rear end part 1b12 of the partition could break, being unable to withstand an instantaneous load imparted by the pressure of the inflator gas on the separating wall fabric 1b1 in the process of development of the airbag 1, this reinforcing member 1e is provided to prevent the rear end part 1b12 of the partition from breaking. It should be noted that in FIG. 2, the arrow F indicates the direction of the front of the vehicle, in which the airbag 1 is developed, and the arrows F2 and F3 indicate the flow of the inflator gas discharged from the inflator 2.

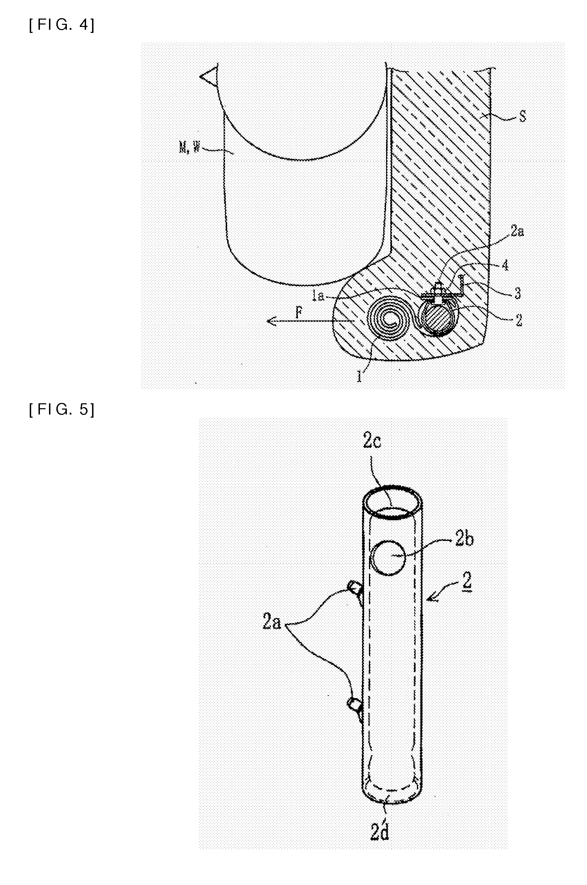

FIG. 4 is a sectional view from above showing the state where the side airbag device A of the first embodiment is stored within the seat back S. The airbag is stored within the seat back S in a folded state, and the cylindrical inflator 2 is installed in a vertical orientation in the rear end part 1a of the airbag 1. The inflator 2 is affixed to an attaching member 3 via the airbag rear end part 1a. It should be noted that 2a is an attaching bolt and 4 is a nut. Furthermore, the arrow F shows the front direction of the vehicle, which is the direction in which the folded airbag 1 develops.

FIG. 5 is a drawing illustrating the construction of the inflator 2, which is provided with a side discharge port 2b, an upper discharge port 2c, and a lower discharge port 2d, and two attaching bolts 2a protrude in the lateral direction. Also, in the event of a side collision of the vehicle, the inflator gas is discharged from both the side discharge port 2b and the upper discharge port 2c into the upper chamber 1c, and the inflator gas is discharged from the lower discharge port 2d into the lower chamber 1d (see the arrows F2 and F3 of FIG. 2).

Accordingly, in the first embodiment, a method is employed for increasing the number of discharge ports facing the upper chamber 1c and for increasing the combined surface areas of the discharge ports facing the upper chamber, as one adjustment means for raising the internal pressure of the upper chamber 1c higher than the internal pressure of the lower chamber 1d. Thus, since the internal pressure of the inflator gas in the upper chamber 1c that protects the shoulders M2 and W2 is set at a high level, the developing speed can be increased, making it possible to react to even a powerful side collision, and on the other hand, since the internal pressure of the inflator gas in the lower chamber 1d is set at a low level, it becomes possible to protect the abdominal area softly using a suitable internal pressure, thus making it possible to set the maximum internal pressure of the inflator gas according to the part of the occupant to be protected. It should be noted that the adjustment means can be constructed to set separate gas flow volumes by either separating the inflator 2 into a plurality, or preparing a plurality thereof in advance, and adjusting the amount of gas-generating agent according to the respectively set internal pressures.

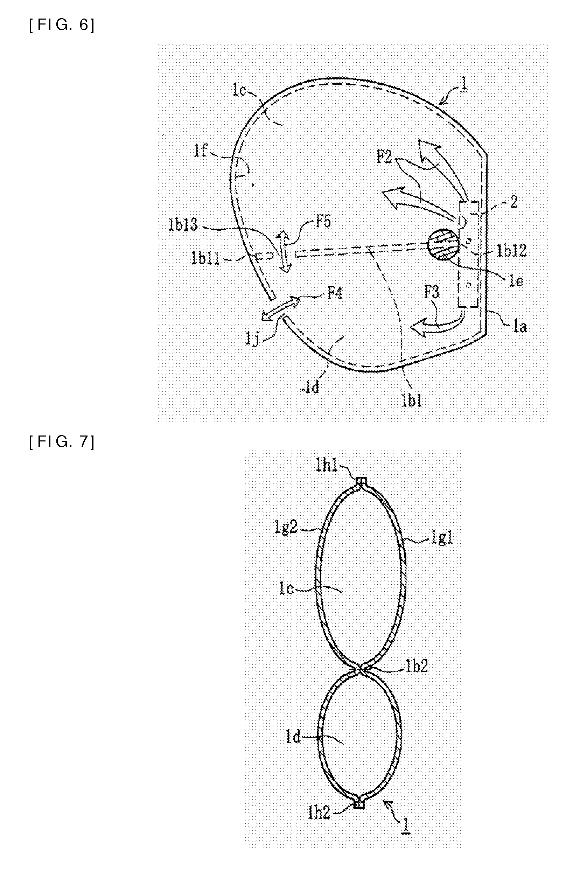

Next, FIG. 6 is a drawing illustrating the construction of the second embodiment of the present invention. In the second embodiment, a vent 1j which connects the airbag 1 to the outside is provided to the lower chamber 1d to more suitably adjust the internal pressure of the inflator gas. As shown by the arrow F4, the inflator gas within the lower chamber 1d can flow to the outside through this vent 1j. This makes it possible to prevent the internal pressure of the inflator gas in the lower chamber 1d from becoming excessively high.

Furthermore, the second embodiment provides a through- hole 1b13 which connects the upper chamber 1c and the lower chamber 1d to each other as shown by the arrow F5, at a position in the separating wall fabric 1b1 toward the front of the vehicle, in order to further suitably adjust the internal pressure of the inflator gas. This makes it possible to optimally adjust the difference in the internal pressure of the inflator gas between the upper chamber 1c and the lower chamber 1d during development.

Following is a description of embodiments of the side airbag system of the present invention. The first embodiment of the present invention side airbag system has a construction that has, for example, a side airbag device A with an upper chamber 1c that can develop toward the side of the shoulders of the occupant and a lower chamber 1d that can develop toward the aside of the abdomen of the occupant, such as that shown in FIG. 1 (in the description of the side airbag system below, referred to as "first airbag"), as well as a door pad to protect the pelvis of the occupant, or a second airbag which develops so as to protect the pelvis in the event of a vehicle collision.

The first airbag is constructed so that the internal pressure of the upper chamber 1c is higher than the internal pressure of the lower chamber 1d in the event of a vehicle collision, due to an adjustment means such as that shown in FIG. 2, and also constructed so that a part of the upper chamber 1c of the first airbag will develop with the maximum pressure around the area where the shoulder W2 of an occupant with a body type corresponding to a small adult female are positioned.

A door pad to protect the pelvis is provided on the inner side of the door of the vehicle, functioning as a buffer material when the door of the vehicle is impacted by an external force, protecting the occupant's pelvis. The door pad material can be a foamed resin material or the like. Furthermore, the second airbag can, for example, be of the type that is stored within the door, or of the type that is stored in the seat cushion. Accordingly, it is possible to provide protection, focusing on the shoulders, and to absorb the impact in the vicinity of the pelvis of the occupant, by combining the first airbag and the pelvis-protecting door pad or the second airbag.

Furthermore, the second embodiment of the present invention side airbag system further provides a third airbag disposed at the upper rim of a window to protect the head of the occupant, in addition to the side airbag system of the first example. The third airbag protects the occupant's head, and can, for example, utilize a curtain airbag construction, normally being stored in a folded state in an overall vertical orientation, and in the event of a vehicle collision, it is developed from above to below by an inflator gas from an inflator, while dropping like a curtain. Accordingly, by combining the first airbag, and the pelvis-protecting door pad or the second airbag, and the third airbag, it is possible also to absorb impact to the occupant's pelvis and head, thereby making it possible reduce overall injury to the occupant.

Moreover, the third embodiment of the present invention side airbag system further provides a third airbag disposed at the upper rim of a window to protect the head of the occupant, in addition to the first airbag. The first airbag is constructed so that the internal pressure of the upper chamber 1c is higher than the internal pressure of the lower chamber 1d during expansion, by using an adjustment means, such as shown in FIG. 2, and is also constructed so that a part of the upper chamber 1c of the first airbag will develop with the maximum pressure around the area where the center of the shoulders W2 of an occupant with a body type corresponding to a small adult female is positioned. Furthermore, a curtain airbag constructed as above can be used as the third airbag. Accordingly, by combining the first airbag and the head-protecting third airbag, it is possible to more reliably protect the occupant's head.

The above is a description of the embodiments, but the present invention is in no way limited to these examples, and modifications are possible within the scope of the technical concepts given in the Claims. For example, as shown in FIG. 7, it is also possible to employ a sewn partitioning member 1b2 in which the two base fabrics 1g1 and 1g2 that face each other are directly sewn together tightly as an alternative means in cases where the separating wall fabric 1b1 is not employed in the partition 1b.

In this case, the height at which the sewn partitioning member 1b2 is positioned and the operational effect thereof are the same as for the separating wall fabric 1b1. However, when the sewn partitioning member 1b2 is employed, the thickness (dimension in the direction of the vehicle width) during development of the airbag 1 is smaller than when the separating wall fabric 1b1 is employed. Accordingly, the more suitable construction of the partition 1b can be selected according to the conditions for installing it in the vehicle.

The side airbag device of the present invention can be installed in almost all vehicles, without limitation to high-end vehicles, since it is designed so as to reduce the manufacturing cost.

## Claims

1. A side airbag device which protects an occupant comprising:
an airbag stored within a seat back and developed by a supply of an inflator gas from an inflator toward a front of a vehicle between a side of the vehicle and the occupant at a vehicle collision, wherein the airbag is partitioned into an upper chamber and a lower chamber by means of a partition, the upper chamber being sized such that, during development, it does not reach a head of an occupant corresponding to an adult male and being configured such that it develops to a side of a shoulder of an occupant corresponding to a small adult female, and the lower chamber being configured such that it develops toward the abdomen of the occupant in the event of a vehicle collision; and
an adjustment means configured to supply the inflator gas from the inflator into the upper and lower chambers in the event of a vehicle collision to develop them in such a manner that it raises an internal pressure of the upper chamber higher than an internal pressure of the lower chamber.

2. A side airbag device which protects an occupant comprising:
an airbag stored within a seat back and developed by a supply of an inflator gas from an inflator toward a front of a vehicle between a side interior of the vehicle and the occupant at a vehicle collision, wherein the airbag is partitioned into an upper chamber and a lower chamber by means of a partition, the airbag being configured such that the upper chamber develops toward a side of a shoulder of the occupant, and the lower chamber develops toward a side of the abdomen of the occupant; and
an adjustment means configured to supply the inflator gas from the inflator into the upper and lower chambers in the event of a vehicle collision to develop them in such a manner that it raises an internal pressure of the upper chamber higher than an internal pressure of the lower chamber and a part of the upper chamber will develop with a maximum internal pressure around an area where a shoulder of an occupant with a body type corresponding to a small adult female is positioned.

3. The side airbag device of Claim 1 or Claim 2, wherein the partition extends in a longitudinal direction of the vehicle at a height of a side of an upper arm of the occupant, and an attachment of a rear end part of the partition is reinforced by a reinforcing member.

4. The side airbag device of any of Claims 1-3, wherein the partition comprises either a separating wall fabric sewn between two sheets of base fabric facing each other and forming the airbag, or a sewn partitioning member provided by stitching two sheets of base fabrics together.

5. The side airbag device of any of Claims 1-4, wherein at least one vent communicating outside of the airbag is provided at a predetermined position of the lower chamber.

6. The side airbag device of any of Claims 1-5, wherein at least one through-hole communicating the upper chamber and the lower chamber is provided at a predetermined position.

7. A side airbag system which protects an occupant comprising:
at least one airbag configured to develop by a supply of an inflator gas from an inflator between a side of a vehicle and an occupant at a vehicle collision;
a first airbag stored within a seat back and having an upper chamber developing toward a front of the vehicle and to a shoulder side of an occupant, and a lower chamber developing toward an abdomen of the occupant; and
a door pad located between the side of the vehicle and the occupant for protecting the occupant's pelvis, or a second airbag developed to protect the occupant's pelvis in the event of a vehicle collision,
wherein during development of the first airbag, an internal pressure of the upper chamber is higher than an internal pressure of the lower chamber, and a part of the upper chamber will develops with a maximum internal pressure around an area where a shoulder of an occupant with a body type corresponding to a small adult female is positioned.

8. The side airbag system of Claim 7, further comprising a third airbag being disposed at an upper rim of a window of the vehicle to protect the occupant's head.

9. A side airbag system which protects an occupant comprising:
at least one airbag developed by a supply of an inflator gas from an inflator between a side of a vehicle and the occupant at a vehicle collision;
a first airbag stored within a seat back and having an upper chamber developing toward a front of the vehicle and to a shoulder of an occupant and a lower chamber developing toward an abdomen of the occupant; and
a third airbag being disposed at an upper rim of a window of the vehicle for protecting the occupant's head,
wherein an internal pressure of the upper chamber is higher than an internal pressure of the lower chamber during expansion of the first airbag, and a part of the upper chamber will develop with a maximum internal pressure of the first airbag around an area where a center of shoulders of an occupant with a body type corresponding to that of a small adult is positioned.
